# FASCICULE DE BREVET EUROPEEN

(11) **EP 3 333 059 B1**
(45) Date de publication et mention de la délivrance du brevet: **04.11.2020**
(21) Numéro de dépôt: 17203866.3
(22) Date de dépôt: 27.11.2017
(51) Int. Cl.: B62M 3/08

(54) **PÉDALE AUTOMATIQUE DE VÉLO**
AUTOMATISCHES FAHRRADPEDAL
AUTOMATIC BICYCLE PEDAL

(30) Priorité: 06.12.2016 FR 1661978
(43) Date de publication de la demande: 13.06.2018
(73) Titulaire: Look Cycle International, 58000 Nevers (FR)
(72) Inventeur: JAILLET, Vincent, 58130 URZY (FR)
(74) Mandataire: Ipsilon

(56) Documents cités:
- EP-A1- 2 311 719
- EP-A2- 0 516 013
- DE-U1-202011 000 814
- US-A1- 2005 005 729
- US-A1- 2007 193 402
- US-A1- 2016 009 333

## Description

Le domaine technique de l'invention est celui des vélos et plus particulièrement celui des pédales automatiques de vélos.

Ces dernières années, les vélos se sont beaucoup développés, tant sur le plan des compétions que sur le plan des loisirs. Pour des questions d'ergonomie et de sécurité, il a donc fallu mettre au point des pédales automatiques aptes à assurer une fixation solide avec une chaussure afin que celle-ci ne se désolidarise pas de la pédale au moindre effort, et aptes également à assurer un retrait volontaire de ladite chaussure, afin de pouvoir poser le pied parterre.

La demande US 2007/193402 A1 divulgue toutes les caractéristiques du préambule de la revendication 1. La demande US2012/0167711 décrit une pédale automatique de vélo possédant un mécanisme d'engagement incluant un siège fixe, une pièce annulaire, un dépresseur, deux ressorts de torsion, un arbre et une vis de fixation. Le siège fixe a substantiellement une forme en C et possède à chacune de deux de ses extrémités un trou de fixation et un panneau pivotant s'étendant perpendiculairement audit siège en forme de C. Chacun desdits panneaux pivotant comporte un trou de pivotement circulaire dont l'axe de révolution s'étend parallèlement à une patte de blocage. Le siège fixe est monté pivotant sur la pièce annulaire. Deux mécanismes d'engagement sont montés de façon symétrique sur le corps d'une pédale et une cale d'une chaussure d'un cycliste vient s'insérer entre lesdits deux mécanismes. Plus précisément, la partie avant de la cale vient d'abord en butée contre la pièce annulaire du mécanisme d'engagement avant, ladite pièce annulaire étant fixe. Puis, une fois que la partie avant de la cale est en butée contre ladite pièce annulaire dudit mécanisme avant, le cycliste insère la partie arrière de la cale dans la pièce annulaire du mécanisme d'engagement arrière. Pour ce faire, il doit fournir dans un premier temps un certain effort pour provoquer le pivotement vers l'arrière de la pièce annulaire du mécanisme arrière. Puis, une fois que la cale est complètement insérée dans la pièce annulaire du mécanisme arrière, ladite pièce annulaire reprend sa position initiale sous l'effet de l'effort produit par les ressorts de torsion.

Une pédale automatique de vélo selon l'invention comprend deux mécanismes d'engagement qui sont simples et faciles à mettre en œuvre, et qui permettent une fixation sûre et fiable d'une chaussure d'un cycliste.

L'invention a pour objet une pédale automatique de vélo comprenant un corps allongé duquel émergent au moins deux bras situés de part et d'autre dudit corps, ladite pédale comprenant en outre deux mécanismes d'engagement aptes à venir se fixer chacun à l'un desdits bras.

La principale caractéristique d'une pédale automatique selon l'invention est que chaque mécanisme d'engagement comprend un premier élément d'accrochage fixe apte à être implanté sur un bras, un deuxième élément d'accrochage monté pivotant sur ledit premier élément d'accrochage au moyen d'un axe de pivotement traversant lesdits deux éléments d'accrochage, et un élément de rappel élastique apte à maintenir le deuxième élément d'accrochage contre le premier élément d'accrochage par l'intermédiaire d'un système de butée, le premier et le deuxième élément d'accrochage étant constitués par des pièces ouvertes présentant chacune un crochet d'accrochage, lesdits deux mécanismes d'engagement étant disposés sur la pédale de manière à former deux dispositifs de fixation, chaque dispositif de fixation incluant le crochet d'accrochage du premier élément d'accrochage d'un mécanisme d'engagement et le crochet d'accrochage du deuxième élément d'accrochage de l'autre mécanisme d'engagement. Une pédale automatique selon l'invention possède ainsi deux mécanismes d'engagement aptes à définir deux dispositifs de fixation, chacun desdits dispositifs de fixation combinant le premier élément d'accrochage d'un mécanisme d'engagement avec le deuxième élément d'accrochage de l'autre mécanisme d'engagement. Les deux dispositifs de fixation sont placés de façon symétrique par rapport au corps de la pédale. Il est supposé que la semelle de la chaussure destinée à venir s'arrimer à ladite pédale, possède une cale destinée à venir s'insérer dans un dispositif de fixation entre les deux mécanismes d'engagement. Le premier élément d'accrochage est conçu pour émerger du corps de la pédale et ainsi constituer une butée fixe vis-à-vis de la cale de la semelle de la chaussure. De même, le deuxième élément d'accrochage est conçu pour émerger du corps de la pédale et ainsi constituer une butée mobile en rotation vis-à-vis de ladite cale. La partie avant de la cale de la semelle de chaussure va d'abord venir en appui contre un premier élément d'accrochage fixe puis la partie arrière de la cale va venir exercer une poussée vers le bas sur le deuxième élément d'accrochage entrainant la rotation vers l'arrière dudit deuxième élément. Le deuxième élément d'accrochage finit par retrouver sa position initiale sous l'effet de l'effort exercé par l'élément de rappel précontraint, pour piéger la cale une fois que celle-ci a été complètement introduite dans le dispositif de fixation, et assurer la fixation de la chaussure. Chaque mécanisme d'engagement peut être monté à part pour constituer un système autonome, puis peut venir ensuite se monter sur le corps de la pédale. Les deux bras du corps peuvent être placés l'un en face de l'autre, ou bien être décalés l'un par rapport à l'autre le long dudit corps. Chaque bras constitue une base de fixation pour un mécanisme d'engagement. Préférentiellement, le premier élément d'accrochage, le deuxième élément d'accrochage et l'axe de pivotement sont réalisés en métal. Le fait que le premier élément et le deuxième élément d'accrochage soient constitués par des pièces ouvertes, signifie qu'ils sont dimensionnés au plus juste de façon à alléger la pédale et à simplifier les différents mécanismes mis en œuvre. Le terme « ouvert » signifie que lesdits éléments peuvent par exemple avoir une forme en C ou en L, mais qu'ils ne sont pas fermés pour former un anneau. Le système de butée comprend au moins une butée implantée sur au moins l'un des deux éléments à choisir parmi le premier élément d'accrochage et le deuxième élément d'accrochage. Chaque butée peut être constituée, soit par une extension d'au moins l'un des deux éléments d'accrochage, soit par une pièce rapportée fixée à au moins l'un desdits éléments d'accrochage. Selon un mode de réalisation préféré d'une pédale selon l'invention, le système de butée comprend au moins une butée implantée sur le deuxième élément d'accrochage mobile et apte à venir en appui contre une autre butée implantée sur le premier élément d'accrochage. Le système de butée a pour objet de positionner par défaut, toujours au même emplacement, le deuxième élément d'accrochage mobile par rapport au premier élément d'accrochage fixe, sous l'effet de l'élément de rappel précontraint.

Avantageusement, quatre bras émergent du corps allongé et délimitent deux emplacements situés de part et d'autre du corps, chaque emplacement étant bordé par deux bras et étant destiné à recevoir un mécanisme d'engagement. Ainsi, chaque mécanisme est placé de part et d'autre du corps de la pédale, de sorte que le premier élément d'accrochage d'un mécanisme d'engagement soit aligné avec le deuxième élément d'accrochage de l'autre mécanisme d'engagement selon une direction perpendiculaire à un axe longitudinal du corps de la pédale.

De façon préférentielle, le premier élément d'accrochage est constitué par une pièce possédant un segment central prolongé par deux segments latéraux, chaque segment latéral se terminant par un segment d'extrémité s'étendant perpendiculairement audit segment latéral et possédant un trou destiné au passage d'un organe de fixation, chaque premier élément d'accrochage étant apte à venir se fixer à deux bras du corps par l'intermédiaire de ses deux segments d'extrémité. Autrement dit, chaque premier élément d'accrochage est une pièce ayant sensiblement une forme en C, prolongée par deux segments perpendiculaires. Il est avantageusement supposé que les deux segments latéraux soient parallèles entre eux, et perpendiculaires au segment central.

Préférentiellement, le segment central et les deux segments latéraux du premier élément d'accrochage sont inscrits dans un même premier plan, les deux segments d'extrémité étant inscrits dans un deuxième plan qui est perpendiculaire au premier plan.

De façon avantageuse, les deux bras délimitant un emplacement possèdent des faces planes en regard l'une de l'autre, lesdites faces planes étant chacune bordée par au moins une rainure et définissant une glissière dans laquelle est destiné à coulisser un premier élément d'accrochage d'un mécanisme d'engagement. Cette glissière sert notamment d'élément de guidage pour placer correctement le premier élément d'accrochage sur le corps de la pédale. Elle permet en outre une reprise d'effort lorsque l'on vient fixer la cale dans le dispositif de fixation.

Avantageusement, le système de butée comprend au moins une première butée implantée sur au moins un segment latéral d'un premier élément d'accrochage et s'étendant perpendiculairement audit segment latéral.

De façon préférentielle, le deuxième élément d'accrochage est une pièce possédant une embase centrale prolongée par deux tronçons latéraux, l'axe de pivotement traversant les deux segments latéraux du premier élément d'accrochage et les deux tronçons latéraux du deuxième élément d'accrochage. Le deuxième élément d'accrochage a ainsi sensiblement le même profile que celui du premier élément d'accrochage, et sont préférentiellement agencés l'un par rapport à l'autre pour former une pièce résultante annulaire.

Préférentiellement, le système de butée comprend au moins une deuxième butée implantée sur au moins un tronçon latéral du deuxième élément d'accrochage et s'étendant perpendiculairement audit tronçon latéral, ladite au moins une deuxième butée venant en appui contre au moins une première butée du premier élément d'accrochage sous l'effet de l'élément de rappel élastique. Par défaut, l'élément de rappel élastique est précontraint, de manière à repousser les deuxièmes butées du deuxième élément d'accrochage contre les premières butées du premier élément d'accrochage. Il faut donc produire un certain effort pour écarter lesdites deuxièmes butées desdites premières butées. Selon une variante de réalisation, la deuxième butée peut également être le tronçon latéral en lui-même.

De façon avantageuse, chaque élément de rappel élastique est constitué par au moins un ressort hélicoïdal de torsion enroulé autour de l'axe de pivotement. Selon d'autres variantes de réalisation, chaque élément de rappel peut être constitué d'un ressort à lame, ou d'un élastomère.

Avantageusement, le deuxième élément d'accrochage porte un dispositif de réglage de la tension de l'élément de rappel élastique. Il est donc possible d'intervenir sur la raideur du ressort pour obtenir une fixation plus ou moins ferme de la chaussure sur la pédale.

L'invention a pour autre objet un mécanisme d'engagement pour la réalisation d'une pédale automatique selon l'invention, comprenant un premier élément d'accrochage, un deuxième élément d'accrochage, un axe de pivotement et un élément de rappel élastique.

La principale caractéristique d'un mécanisme d'engagement selon l'invention est qu'il peut être monté à part pour constituer un ensemble autonome. L'expression « monté à part », signifie que le mécanisme d'engagement comprenant un premier élément d'accrochage, un deuxième élément d'accrochage, un axe de pivotement et un élément de rappel élastique peut d'abord être monté avant de venir se fixer au corps de la pédale.

Une pédale automatique de vélo selon l'invention présente l'avantage de pouvoir être fabriquée simplement et rapidement, car les différents éléments et les différentes pièces impliqués ont une géométrie simple et des interactions parfaitement maitrisées. Cette simplicité de fabrication est accentuée par le fait que les mécanismes d'engagement peuvent être montés à part, sans obligation de les monter progressivement sur le corps de la pédale. Elle a de plus l'avantage d'être ergonomique, car la fixation d'une chaussure adaptée, s'effectue sans effort particulier et sans manipulations compliquées, et de présenter un bon niveau de sécurité car la chaussure, une fois qu'elle a été fixée à la pédale ne peut pas facilement être désolidarisée involontairement de celle-ci.

On donne ci-après, une description détaillée d'une pédale automatique selon l'invention, en se référant aux figures suivantes :
- La figure 1 est une vue en perspective d'un premier mode de réalisation préféré d'une pédale automatique de vélo selon l'invention,
- La figure 2 est une vue en perspective du corps de la pédale de la figure 1,
- La figure 3 est une vue en perspective d'un mécanisme d'engagement de la pédale de la figure 1,
- La figure 4 est une vue en perspective d'un deuxième mode de réalisation préféré d'une pédale automatique de vélo selon l'invention,
- La figure 5 est une vue en perspective éclatée de la pédale de la figure 4,
- La figure 6 est une vue en perspective éclatée partielle de la pédale de la figure 4,
- La figure 7 est une vue en perspective d'un mécanisme d'engagement de la pédale de la figure 4,
- La figure 8 est une vue en perspective du corps de la pédale de la figure 4,
- La figure 9 est une vue en coupe de la pédale de la figure 4.

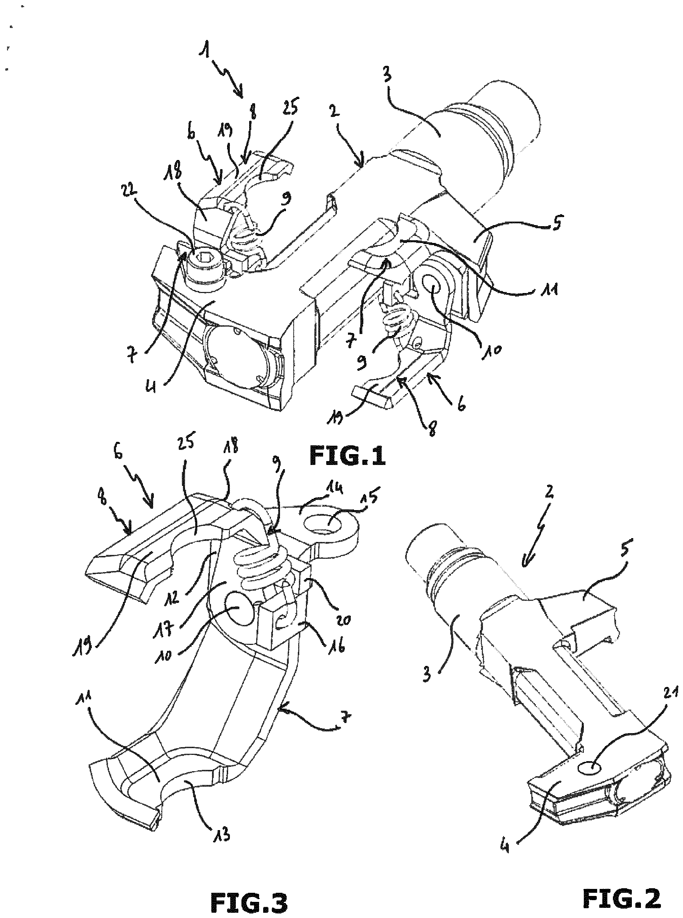

En se référant à la figure 2, un premier mode de réalisation préféré d'une pédale 1 automatique d'un vélo selon l'invention comprend un corps 2 creux sensiblement cylindrique dont l'axe longitudinal est parallèle à son axe de révolution. Le terme « sensiblement cylindrique » signifie que le corps a globalement une forme cylindrique, dont au moins un tronçon est non rigoureusement cylindrique. Ce corps 2 est constitué par un fût 3 cylindrique, apte à recevoir une ligne d'axe et par deux bras 4, 5 qui sont implantés de part et d'autre dudit corps 2, en étant décalés l'un par rapport à l'autre, selon un axe longitudinal dudit corps 2. Autrement dit, les deux bras 4, 5 saillent de chaque côté du corps 2 en étant inscrits dans un même plan, l'un 4 desdits bras étant implanté au niveau de l'extrémité du corps 2 qui est opposée à celle d'où dépasse l'axe, l'autre bras 5 saillant dudit corps 2 en retrait et du côté du filetage de l'axe. Chaque bras 4, 5 possède un trou 21 pour le passage d'une vis de fixation.

En se référant à la figure 1, les deux bras 4, 5 du corps 2 servent chacun de base d'ancrage à un mécanisme d'engagement 6, comme par exemple celui qui est représenté à la figure 3.

En se référant à la figure 3, les deux mécanismes d'engagement 6 sont identiques et comprennent un premier élément d'accrochage 7 fixe, un deuxième élément d'accrochage mobile 8, un élément de rappel élastique 9 sous la forme d'un ressort hélicoïdale, et un axe de pivotement 10. Le premier élément d'accrochage 7 est une pièce courbe, assimilable à une pièce en forme de L, dont les deux extrémités 11, 12 s'étendent perpendiculairement l'une à l'autre. Cette pièce est de faible épaisseur et ses deux extrémités 11, 12 peuvent être assimilées à des segments plans. L'une 11 de ses deux extrémités comprend une encoche 13 arrondie et sert de crochet de fixation pour une cale placé sous la semelle d'une chaussure. L'autre extrémité 12 de ce premier élément d'accrochage 7 se termine par une patte de fixation 14 plane et dotée d'un trou 15 destiné au passage d'un élément de fixation, tel que par exemple une vis de fixation, et par une première butée 16 plane ayant un contour sensiblement rectangulaire. Le plan de la première butée 16 est perpendiculaire au plan de la patte de fixation 14, lesdits deux plans étant perpendiculaires au plan de l'extrémité 12 du premier élément d'accrochage 7 sur laquelle sont implantées ladite patte 14 et ladite première butée 16.

Le deuxième élément d'accrochage 8 est une pièce de faible épaisseur comprenant schématiquement trois tronçons plans 17, 18, 19, comprenant un tronçon intermédiaire 18 prolongé de chaque côté par un tronçon d'extrémité 17, 19, lesdits tronçons d'extrémité s'étendant perpendiculairement l'un par rapport à l'autre. L'un 17 des tronçons d'extrémité est doté d'une deuxième butée plane 20 ayant un contour rectangulaire, l'autre tronçon d'extrémité 19 comportant une encoche arrondie 25 apte à servir de crochet de fixation pour une cale placé sous la semelle d'une chaussure.

Le deuxième élément d'accrochage 8 est monté pivotant sur le premier élément d'accrochage 7 par l'intermédiaire de l'axe de pivotement 10. Plus précisément, l'axe de pivotement 10 est une pièce cylindrique traversant une zone 12 du premier élément d'accrochage 7 sur laquelle sont implantées la patte de fixation 14 et la première butée 16, et le tronçon d'extrémité 17 du deuxième élément d'accrochage 8 doté de la deuxième butée 20.

L'élément de rappel élastique 9 relie la première butée 16 au tronçon intermédiaire 18 du deuxième élément d'accrochage 8. Plus précisément une extrémité filaire du ressort 9 traverse la première butée 16 tandis que l'autre extrémité filaire du ressort 9 s'accroche au tronçon intermédiaire 18. Le ressort 9 est monté en étant précontraint, de sorte qu'il a tendance à maintenir le deuxième élément d'accrochage 8 contre le premier élément d'accrochage 7, et plus exactement à maintenir la deuxième buté 20 dudit deuxième élément 8 contre la première butée 16 dudit premier élément 7. Il faut donc fournir un certain effort pour faire pivoter le deuxième élément d'accrochage 8 autour de l'axe de pivotement 10 par rapport au premier élément d'accrochage 7, dans un sens qui favorise la séparation desdites deux butées 16, 20. Une fois que le premier élément d'accrochage 7, le deuxième élément d'accrochage, l'élément de rappel élastique 9 et l'axe de pivotement ont été montés ensemble, chaque mécanisme d'engagement 6 constitue un système autonome apte à venir directement se fixer aux deux bras 4, 5 du corps 2 creux de la pédale automatique 1. Le premier élément d'accrochage 7 et le deuxième élément d'accrochage 8 se chevauchent partiellement pour former une zone d'intersection traversée par l'axe de pivotement 10, et forment une pièce résultante en forme de U, c'est-à-dire non fermée.

En se référant à la figure 1, chaque mécanisme d'engagement 6 vient se fixer à un bras 4, 5 du corps creux 2, par l'intermédiaire du premier élément d'accrochage 7. En effet, la patte de fixation 14 plane du premier élément d'accrochage vient au contact d'une surface plane d'un bras 4, 5 de sorte que leurs trous 15, 21 respectifs soient en correspondance, puis une vis 22 est introduite dans lesdits trous 15, 21 pour fixer le mécanisme d'engagement 6 audit bras 4, 5. Les deux mécanismes d'engagement 6 sont montés sur le corps creux 2 de la pédale 1, de manière à former deux dispositifs de fixation formés chacun par un premier élément de fixation 7 d'un mécanisme d'engagement 6 et par un deuxième élément de fixation 8 de l'autre mécanisme d'engagement 6. Les deux dispositifs de fixation sont placés de part et d'autre du corps creux 2 de la pédale 1 et se déduisent l'un de l'autre par une rotation de 180° de ladite pédale 1 autour du corps creux 2. L'axe fictif reliant le premier élément d'accrochage 7 au deuxième élément d'accrochage 8 au sein d'un même dispositif de fixation, s'étend perpendiculairement à l'axe longitudinal du corps creux 2 de la pédale 1.

En supposant que la semelle d'une chaussure à monter sur la pédale 1 est dotée d'une cale, un procédé de fixation de ladite chaussure à ladite pédale 1 suit les étapes suivantes :
- Une étape d'introduction de la partie avant de la cale dans un dispositif de fixation de la pédale 1, de manière à ce que ladite partie avant vienne dans le premier élément d'accrochage 7 dudit dispositif de fixation,
- Une étape d'introduction de la partie arrière de la cale sur le deuxième élément d'accrochage 8 du même dispositif de fixation,
- Une étape de poussée de la cale vers le bas entrainant la rotation vers l'arrière du deuxième élément d'accrochage 8,
- Une étape de retour à sa position initiale du deuxième élément d'accrochage 8 sous l'effet de l'effort exercé par l'élément de rappel 9 précontraint, pour piéger la cale une fois que celle-ci a été complètement introduite dans le dispositif de fixation, et assurer la fixation de la chaussure.

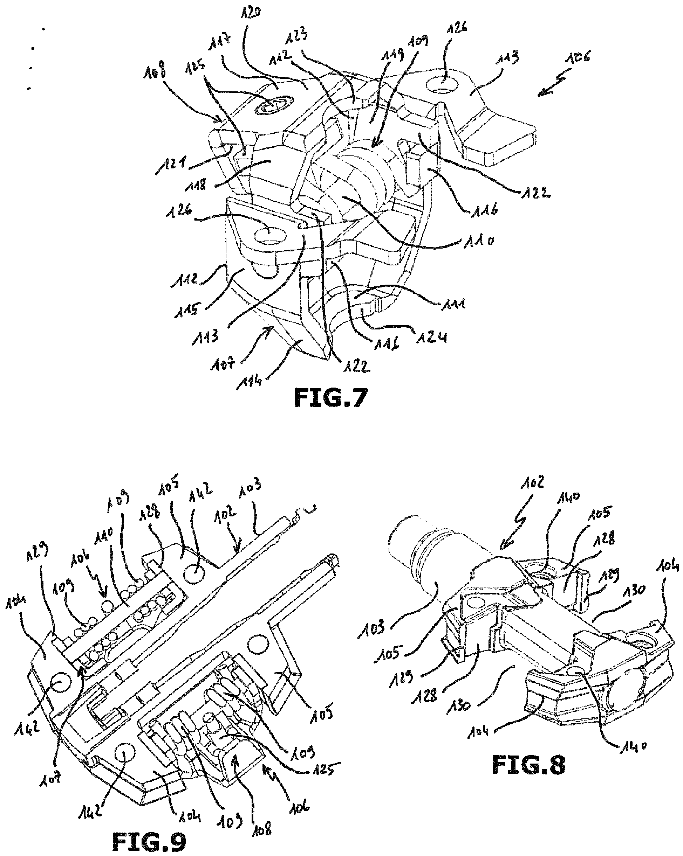

En se référant à la figure 8, un deuxième mode de réalisation préféré d'une pédale 100 automatique d'un vélo selon l'invention comprend un corps 102 creux sensiblement cylindrique dont l'axe longitudinal est parallèle à son axe de révolution. Le terme « sensiblement cylindrique » signifie que le corps a globalement une forme cylindrique, mais qu'au moins un tronçon est non rigoureusement cylindrique. Ce corps 102 est constitué par un fût 103 cylindrique, apte à recevoir une ligne d'axe et par quatre bras 104, 105 qui sont implantés dans le corps 102, de manière à ce que deux bras 104, 105 saillent d'un côté dudit corps 102 et deux bras 104, 105 saillent de l'autre côté de celui-ci. Les deux bras 104, 105 situés d'un même côté sont parfaitement alignés le long de l'axe longitudinal du corps creux 102 de la pédale 1, avec les deux autres bras 104, 105 situés de l'autre côté, les quatre bras étant inscrits dans un même plan. Deux bras 104, 105 situés d'un même côté du corps creux 102 délimitent un emplacement 130 apte à recevoir un mécanisme d'engagement 106. Deux bras 104 alignés sont implantés au niveau de l'extrémité du corps 102 qui est opposée à celle d'où dépasse l'axe, les deux autres bras 105 alignés saillant dudit corps 102 en retrait et du côté du filetage de l'axe. Chacun des quatre bras 104, 105 possède un trou 140 pour le passage d'une vis de fixation. Les deux bras 104, 105 situés d'un même côté du corps 102 sont aptes à recevoir un mécanisme d'engagement 106, comme par exemple celui qui est montré à la figure 7, et servent chacun de base d'ancrage audit mécanisme d'engagement 106. De cette manière, deux mécanismes d'engagement 106 sont destinés à être fixés de part et d'autre du corps 102 creux de la pédale 1. Les deux bras 104, 105 situés d'un même côté du corps creux 102 et délimitant l'emplacement 130 apte à recevoir le mécanisme d'engagement 106, présentent chacun une face plane 128 en regard l'une de l'autre, lesdites deux faces planes 128 étant sensiblement parallèles. Chacune des faces planes 128 est bordée par une nervure 129, de sorte que lesdites deux faces planes 128 dotées de leur nervure 129 définissent une glissière/rainure permettant de guider l'implantation du mécanisme d'engagement 106 et de limiter les déformations de celui-ci lors de la fixation de la cale dans le dispositif de fixation en reprenant les efforts.

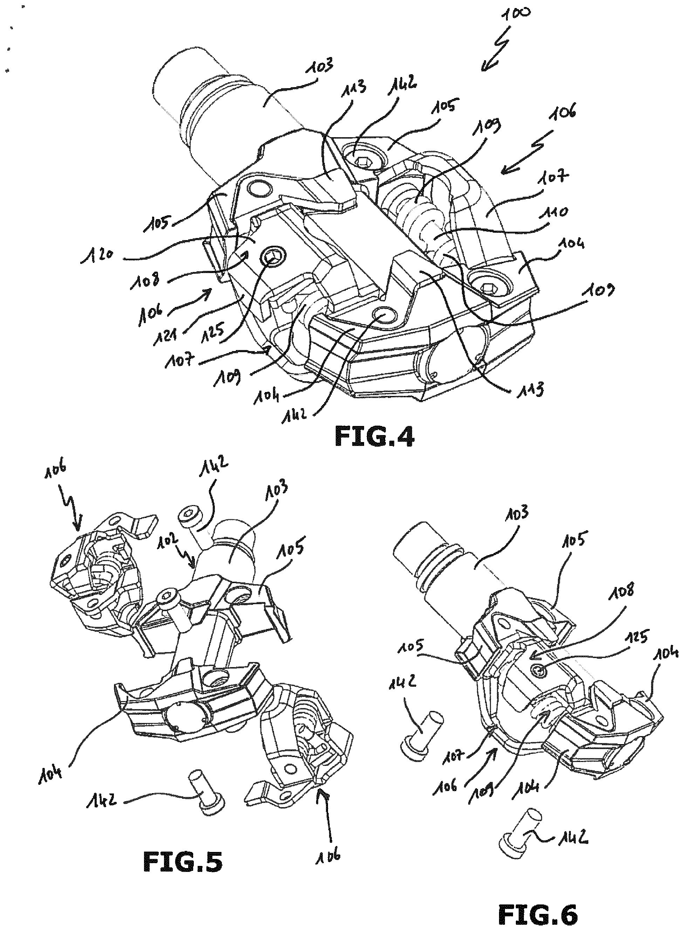

En se référant aux figures 4, 5 et 6, les deux mécanismes d'engagement 106 sont identiques.

En se référant à la figure 7, un mécanisme d'engagement 106 comprend un premier élément d'accrochage 107 fixe, un deuxième élément d'accrochage mobile 108, un élément de rappel élastique 109 et un axe de pivotement 110. Le premier élément d'accrochage 107 est une pièce de faible épaisseur comportant un segment central 111 prolongé à ses deux extrémités par des segments latéraux 112 se terminant chacun par un segment d'extrémité 113. Chaque segment latéral est constitué de deux sous-segments 114, 115 inclinés, l'un 114 prolongeant le segment central 111 et l'autre étant prolongé par le segment d'extrémité 113, lesdits deux sous-segments 114, 115 étant dans la continuité et au contact l'un de l'autre. Le segment central 111 et les deux segments latéraux 114, 115 définissent une pièce en forme de C, les deux segments d'extrémité 113 étant parallèles entre eux, et s'étendant perpendiculairement à ladite pièce en forme de C. Chaque segment d'extrémité 113 possède un trou 126 destiné au passage d'un élément de fixation, comme par exemple une vis 142 de fixation. Les deux segments latéraux 112 sont chacun doté d'une première butée plane 116 ayant un contour sensiblement rectangulaire, lesdites butées 116 étant implantées dans lesdits segments latéraux 114, 115 de manière à s'étendre l'une vers l'autre. Le segment central 111 est doté d'une encoche 124 arrondie et est destinée à servir de crochet de fixation pour une cale placée sous la semelle d'une chaussure.

Le deuxième élément d'accrochage 108 est une pièce de faible épaisseur comprenant schématiquement une embase centrale 117 prolongée par deux tronçons latéraux 118, 119. L'embase centrale 117 est constituée de deux parois planes 120, 121 faisant entre elles un angle d'environ 90° plus ou moins 10°, les tronçons latéraux 118, 119 étant implantés sur les côtés de l'une 120 desdites parois. L'embase centrale 117 et les deux tronçons latéraux 118, 119 définissent une pièce en forme de C. Chaque tronçon latéral 118, 119 est doté d'une deuxième butée 122 parallélépipédique s'étendant perpendiculairement auxdits tronçons latéraux 118, 119 et vers l'extérieur de ladite pièce en forme de C, de manière à agrandir les dimensions de celle-ci. L'embase centrale 117 possède une encoche arrondie 123, et est destinée à servir de crochet de fixation pour une cale placée sous la semelle d'une chaussure.

Le deuxième élément d'accrochage 108 est monté pivotant sur le premier élément d'accrochage 107 par l'intermédiaire de l'axe de pivotement 110. Plus précisément, l'axe de pivotement 110 est une pièce cylindrique allongée, assimilable à une tige traversant les deux segments latéraux 112 du premier élément d'accrochage 107 et les deux tronçons latéraux 118, 119 du deuxième élément d'accrochage 108. Le premier élément d'accrochage 107 et le deuxième élément d'accrochage 108 forment une pièce fermée assimilable à un anneau.

L'élément de rappel élastique 109 est constitué de deux ressorts. L'embase centrale 117 du deuxième élément d'accrochage mobile 108 porte un dispositif de réglage 125 de la tension des deux ressorts 109, sous la forme d'une butée déplaçable par vissage. Chaque ressort 109 est bloqué entre une première butée 116 d'un segment latéral 112 du premier élément d'accrochage 107 et la butée 125 de réglage déplaçable, portée par l'embase centrale 117. Chaque ressort 109 est monté en étant précontraint, de sorte qu'il a tendance à maintenir le deuxième élément d'accrochage 108 contre le premier élément d'accrochage 107, et plus exactement à maintenir les deuxièmes butées 122 dudit deuxième élément 108 contre les premières butées 116 dudit premier élément 107. Il faut donc fournir un certain effort pour faire pivoter le deuxième élément d'accrochage 108 autour de l'axe de pivotement 110 par rapport au premier élément d'accrochage 107, dans un sens qui favorise la séparation desdites butées 116, 122. Une fois que le premier élément d'accrochage 107, le deuxième élément d'accrochage 108, l'élément de rappel élastique 109 et l'axe de pivotement 110 ont été montés ensemble, chaque mécanisme d'engagement 106 constitue un système autonome apte à venir directement se fixer aux deux bras 104, 105 du corps 102 creux de la pédale automatique 100, en venant se loger dans les emplacements 130 prévus à cet effet.

En se référant aux figures 4, 5 et 6, chaque mécanisme d'engagement 106 vient se fixer aux deux bras 104, 105 du corps creux 2 situés du même côté, par l'intermédiaire du premier élément d'accrochage 107.

En effet, le premier élément d'accrochage 107 d'un mécanisme d'engagement 106 est introduit d'un côté de la glissière délimitée par les deux faces planes 128 dotées de leurs nervures 129 des deux bras 104, 105 délimitant l'emplacement 130 dédié audit mécanisme d'engagement 106. Ledit premier élément d'accrochage 107 coulisse dans la glissière jusqu'à ce que les trous 126 des segments d'extrémité 113 dudit premier élément d'accrochage 107 viennent en correspondance des trous 140 des bras 104, 105. Une vis 142 est ensuite introduite dans lesdits trous 126, 140 pour fixer le mécanisme d'engagement 106 auxdits deux bras 104, 105. Les deux mécanismes d'engagement 106 sont montés sur le corps creux 102 de la pédale 100, de manière à former deux dispositifs de fixation formés chacun par un premier élément de fixation 107 d'un mécanisme d'engagement 106 et par un deuxième élément de fixation 108 de l'autre mécanisme d'engagement 106. Les deux dispositifs de fixation sont placés de part et d'autre du corps creux 102 de la pédale 100 et se déduisent l'un de l'autre par une rotation de 180° de ladite pédale 100 autour de son axe. L'axe fictif reliant le premier élément d'accrochage 107 au deuxième élément d'accrochage 108 au sein d'un même dispositif de fixation, s'étend perpendiculairement à l'axe longitudinal du corps creux 102 de la pédale 100.

En supposant que la semelle d'une chaussure à monter sur la pédale 100 est dotée d'une cale, un procédé de fixation de ladite chaussure à ladite pédale 100 suit les étapes suivantes :
- Une étape d'introduction de la partie avant de la cale dans un dispositif de fixation de la pédale 1, de manière à ce que ladite partie avant vienne dans le premier élément d'accrochage 107 dudit dispositif de fixation,
- Une étape d'introduction de la partie arrière de la cale sur le deuxième élément d'accrochage 108 du même dispositif de fixation,
- Une étape de poussée de la cale vers le bas entrainant la rotation vers l'arrière du deuxième élément d'accrochage 108,
- Une étape de retour à sa position initiale du deuxième élément d'accrochage 108 sous l'effet de l'effort exercé par l'élément de rappel 109 précontraint, pour piéger la cale une fois que celle-ci a été complètement introduite dans le dispositif de fixation, et assurer la fixation de la chaussure.

## Revendications

1. Pédale automatique (1, 100) de vélo comprenant un corps (2, 102) allongé duquel émergent au moins deux bras (4, 5, 104, 105) situés de part et d'autre dudit corps (2, 102), ladite pédale (1, 100) comprenant en outre deux mécanismes d'engagement (6, 106) aptes à venir se fixer chacun à l'un desdits bras (4, 5, 104, 105), chaque mécanisme d'engagement (6, 106) comprend un premier élément d'accrochage rapporté (7, 107) apte à être arrimé de façon fixe sur un bras (4, 5, 104, 105), un deuxième élément d'accrochage (8, 108) monté pivotant sur ledit premier élément d'accrochage (7, 107) au moyen d'un axe de pivotement (10, 110) traversant lesdits deux élément d'accrochage (7, 8, 107, 108), et un élément de rappel élastique (9, 109) apte à maintenir le deuxième élément d'accrochage (8, 108) contre le premier élément d'accrochage (7, 107) par l'intermédiaire d'un système de butées, et en ce que le premier (7, 107) et le deuxième élément (8, 108) d'accrochage sont constitués par des pièces ouvertes présentant chacune un crochet d'accrochage (13, 25, 123, 124), **caractérisée en ce que** lesdits deux mécanismes d'engagement (6, 106) étant disposés sur la pédale (1, 100) de manière à former deux dispositifs de fixation, chaque dispositif de fixation incluant le crochet d'accrochage (13, 124) du premier élément d'accrochage (7, 107) d'un mécanisme d'engagement (6, 106) et le crochet d'accrochage (25, 123) du deuxième élément d'accrochage (8, 108) de l'autre mécanisme d'engagement (6, 106).

2. Pédale automatique selon la revendication 1, **caractérisée en ce que** quatre bras (104, 105) émergent du corps allongé (102) et délimitent deux emplacements (130) situés de part et d'autre du corps (102), et **en ce que** chaque emplacement (130) est bordé par deux bras (104, 105) et est destiné à recevoir un mécanisme d'engagement (106).

3. Pédale automatique selon la revendication 2, **caractérisée en ce que** le premier élément d'accrochage (107) est constitué par une pièce possédant un segment central (111) prolongé par deux segments latéraux (112), et **en ce que** chaque segment latéral (112) se termine par un segment d'extrémité (113) s'étendant perpendiculairement audit segment latéral (112) et possédant un trou (126) destiné au passage d'un organe de fixation (142), chaque premier élément d'accrochage (107) étant apte à venir se fixer à deux bras (104, 105) du corps (102) par l'intermédiaire de ses deux segments d'extrémité (113).

4. Pédale automatique selon la revendication 3, **caractérisée en ce que** le segment central (111) et les deux segments latéraux (112) du premier élément d'accrochage (107) sont inscrits dans un même premier plan, et **en ce que** les deux segments d'extrémité (113) sont inscrits dans un deuxième plan qui est perpendiculaire au premier plan.

5. Pédale automatique selon l'une quelconque des revendications 3 ou 4, **caractérisée en ce que** les deux bras (104, 105) délimitant un emplacement (130) possèdent des faces planes (128) en regard l'une de l'autre, et **en ce que** lesdites faces planes (128) sont chacune bordées par au moins une nervure (129) et définissent une glissière dans laquelle est destiné à coulisser le premier élément d'accrochage (107) d'un mécanisme d'engagement (106).

6. Pédale automatique selon l'une quelconque des revendications 3 à 5, **caractérisée** en que le système de butée comprend au moins une première butée (116) implantée sur au moins un segment latéral (112) d'un premier élément d'accrochage (107) et s'étendant perpendiculairement audit segment latéral (112).

7. Pédale automatique selon l'une quelconque des revendications 3 à 6, **caractérisée en ce que** le deuxième élément d'accrochage (108) est une pièce possédant une embase centrale (117) prolongée par deux tronçons latéraux (118, 119), et **en ce que** l'axe de pivotement (110) traverse les deux segments latéraux (112) du premier élément d'accrochage (107) et les deux tronçons latéraux (118, 119) du deuxième élément d'accrochage (108).

8. Pédale automatique selon les revendications 6 et 7, **caractérisée en ce que** le système de butée comprend au moins une deuxième butée (122) implantée sur au moins un tronçon latéral (118, 119) du deuxième élément d'accrochage (108) et s'étendant perpendiculairement audit tronçon latéral (118, 119), et **en ce que** ladite au moins une deuxième butées (122) vient en appui contre au moins une première butée (116) du premier élément d'accrochage (107) sous l'effet de l'élément de rappel élastique (109).

9. Pédale automatique selon l'une quelconque des revendications 7 ou 8, **caractérisée en ce que** chaque élément de rappel élastique (109) est constitué par au moins un ressort hélicoïdal de torsion enroulé autour de l'axe de pivotement (110).

10. Pédale automatique selon la revendication 9, **caractérisée** en ce le deuxième élément d'accrochage (108) porte un dispositif de réglage de la tension de l'élément de rappel élastique (109).

11. Mécanisme d'engagement (6, 106) pour la réalisation d'une pédale automatique selon l'une quelconque des revendications 1 à 10, comprenant un premier élément d'accrochage (7, 107), un deuxième élément d'accrochage (8, 108), un axe de pivotement (10, 110) et un élément de rappel élastique (9, 109), **caractérisé en ce qu'**il peut être monté à part pour constituer un ensemble autonome.

## Patentansprüche

1. Automatisches Fahrradpedal (1, 100), umfassend einen länglichen Körper (2, 102), von dem mindestens zwei Arme (4, 5, 104, 105) abgehen, die sich beiderseits des Körpers (2, 102) befinden, wobei das Pedal (1, 100) ferner zwei Eingriffmechanismen (6, 106) umfasst, die imstande sind, sich jeweils an einem der Arme (4, 5, 104, 105) zu befestigen, wobei jeder Eingriffmechanismus (6, 106) ein angesetztes erstes Koppelelement (7, 107) umfasst, das imstande ist, fest auf einem Arm (4, 5, 104, 105) angedockt zu sein, ein zweites Koppelelement (8, 108), das drehend auf dem ersten Koppelelement (7, 107) mittels einer Drehachse (10, 110) angebracht ist, die die zwei Koppelelement (7, 8, 107, 108) durchquert, und ein elastisches Rückstellelement (9, 109), das imstande ist, das zweite Koppelelement (8, 108) gegen das erste Koppelelement (7, 107) anhand eines Anschlagsystems zu halten, und dass das erste (7, 107) und das zweite Koppelelement (8, 108) aus offenen Teilen bestehen, die jeweils einen Kopplungshaken (13, 25, 123, 124) aufweisen, **dadurch gekennzeichnet, dass** die zwei Eingriffmechanismen (6, 106) auf dem Pedal (1, 100) derart angeordnet sind, dass sie zwei Befestigungsvorrichtungen bilden, wobei jede Befestigungsvorrichtung den Kopplungshaken (13, 124) des ersten Koppelelements (7, 107) eines Eingriffmechanismus (6, 106) und den Kopplungshaken (25, 123) des zweiten Koppelelements (8, 108) des anderen Eingriffmechanismus (6, 106) einschließt.

2. Automatisches Pedal nach Anspruch 1, **dadurch gekennzeichnet, dass** vier Arme (104, 105) von dem länglichen Körper (102) abgehen und zwei Stellen (130) begrenzen, die sich beiderseits des Körpers (102) befinden, und dass jede Stelle (130) von zwei Armen (104, 105) gesäumt ist und bestimmt, einen Eingriffmechanismus (106) aufzunehmen.

3. Automatisches Pedal nach Anspruch 2, **dadurch gekennzeichnet, dass** das erste Koppelelement (107) aus einem Teil besteht, das ein zentrales Segment (111) besitzt, das von zwei seitlichen Segmenten (112) verlängert wird, und dass jedes seitliche Segment (112) in einem Endsegment (113) endet, das sich senkrecht zu dem seitlichen Segment (112) erstreckt und ein Loch (126) besitzt, das für den Durchgang eines Befestigungsorgans (142) bestimmt ist, wobei jedes erste Koppelelement (107) imstande ist, sich an zwei Armen (104, 105) des Körpers (102) anhand seiner zwei Endsegmente (113) zu befestigen.

4. Automatisches Pedal nach Anspruch 3, **dadurch gekennzeichnet, dass** das zentrale Segment (111) und die zwei seitlichen Segmente (112) des ersten Koppelelements (107) in derselben ersten Ebene eingeschrieben sind, und dass die zwei Endsegmente (113) in einer zweiten Ebene eingeschrieben sind, die senkrecht zu der ersten Ebene ist.

5. Automatisches Pedal nach einem der Ansprüche 3 oder 4, **dadurch gekennzeichnet, dass** die zwei Arme (104, 105), die eine Stelle (130) begrenzen, einander zugewandte ebene Flächen (128) besitzen, und dass die ebenen Flächen (128) jeweils von mindestens einer Rippe (129) gesäumt sind und eine Gleitschiene definieren, in welcher das erste Koppelelement (107) eines Eingriffmechanismus (106) zu gleiten bestimmt ist.

6. Automatisches Pedal nach einem der Ansprüche 3 bis 5, **dadurch gekennzeichnet, dass** das Anschlagsystem mindestens einen ersten Anschlag (116) umfasst, der auf mindestens einem seitlichen Segment (112) eines ersten Koppelelements (107) eingesetzt ist und sich senkrecht zum seitlichen Segment (112) erstreckt.

7. Automatisches Pedal nach einem der Ansprüche 3 bis 6, **dadurch gekennzeichnet, dass** das zweite Koppelelement (108) ein Teil ist, das eine zentrale Grundfläche (117) besitzt, die von zwei seitlichen Abschnitten (118, 119) verlängert wird, und dass die Drehachse (110) die zwei seitlichen Segmente (112) des ersten Koppelelements (107) und die zwei seitlichen Abschnitte (118, 119) des zweiten Koppelelements (108) durchquert.

8. Automatisches Pedal nach den Ansprüchen 6 und 7, **dadurch gekennzeichnet, dass** das Anschlagsystem mindestens einen zweiten Anschlag (122) umfasst, der auf mindestens einem seitlichen Abschnitt (118, 119) des zweiten Koppelelements (108) eingesetzt ist und sich senkrecht zum seitlichen Anschlag (118, 119) erstreckt, und dass sich der mindestens eine zweite Anschlag (122) auf mindestens einem ersten Anschlag (116) des ersten Koppelelements (107) unter der Wirkung des elastischen Rückstellelements (109) abstützt.

9. Automatisches Pedal nach einem der Ansprüche 7 oder 8, **dadurch gekennzeichnet, dass** jedes elastisches Rückstellelement (109) aus mindestens einer Torsionsspiralfeder besteht, die um die Drehachse (110) gewickelt ist.

10. Automatisches Pedal nach Anspruch 9, **dadurch gekennzeichnet, dass** das zweite Koppelelement (108) eine Einstellvorrichtung der Spannung des elastischen Rückstellelements (109) trägt.

11. Eingriffmechanismus (6, 106) für die Herstellung eines automatischen Pedals nach einem der Ansprüche 1 bis 10, umfassend ein erstes Koppelelement (7, 107), ein zweites Koppelelement (8, 108), eine Drehachse (10, 110) und ein elastisches Rückstellelement (9, 109), **dadurch gekennzeichnet, dass** er gesondert angebracht sein kann, um eine autonome Einheit zu bilden.

## Claims

1. An automatic bicycle pedal (1, 100) comprising an elongated body (2, 102) from which emerge at least two arms (4, 5, 104, 105) located on either side of said body (2, 102), said pedal (1, 100) further comprising two engagement mechanisms (6, 106) able to be fastened each to one of said arms (4, 5, 104, 105), each engagement mechanism (6, 106) comprises a first fixed fastening element (7, 107) able to be securely anchored on an arm (4, 5, 104, 105), a second fastening element (8, 108) mounted pivoting on said first fastening element (7, 107) using a pivot axis (10, 110) passing through said two fastening elements (7, 8, 107, 108), and a resilient return element (9, 109) able to keep the second fastening element (8, 108) against the first fastening element (7, 107) by means of a stop system, and in that the first (7, 107) and the second (8, 108) fastening element are made up of open parts each having a fastening hook (13, 25, 123, 124), **characterized in that** said two engagement mechanisms (6, 106) being positioned on the pedal (1, 100) so as to form two attachment devices, each attachment device including the fastening hook (13, 124) of the first fastening element (7, 107) of an engagement mechanism (6, 106) and the fastening hook (25, 123) of the second fastening element (8, 108) of the other engagement mechanism (6, 106).

2. The automatic pedal according to claim 1, **characterized in that** four arms (104, 105) emerge from the elongated body (102) and delimit two locations (130) located on either side of the body (102), and **in that** each location (130) is bordered by two arms (104, 105) and is intended to receive an engagement mechanism (106).

3. The automatic pedal according to claim 2, **characterized in that** the first fastening element (107) is made up of a part having a central segment (111) extended by two lateral segments (112), and **in that** each lateral segment (112) ends with an end segment (113) extending perpendicularly to said lateral segment (112) and having a hole (126) intended for the passage of a fastening member (142), each first fastening element (107) being able to be attached to two arms (104, 105) of the body (102) by means of its two ends segments (113).

4. The automatic pedal according to claim 3, **characterized in that** the central segment (111) and the two lateral segments (112) of the first fastening element (107) lie in a same first plane, and **in that** the two ends segments (113) lie in a second plane that is perpendicular to the first plane.

5. The automatic pedal according to any one of claims 3 or 4, **characterized in that** the two arms (104, 105) delimiting a location (130) have planar faces (128) opposite one another, and **in that** said planar faces (128) are each bordered by at least one rib (129) and define a guideway in which the first fastening element (107) of an engagement mechanism (106) is intended to slide.

6. The automatic pedal according to any one of claims 3 to 5, **characterized in that** the stop system comprises at least one first stop (116) implanted on at least one lateral segment (112) of a first fastening element (107) and extending perpendicularly to said lateral segment (112).

7. The automatic pedal according to any one of claims 3 to 6, **characterized in that** the second fastening element (108) is a part having a central base (117) extended by two lateral segments (118, 119), and **in that** the pivot axis (110) passes through the two lateral segments (112) of the first fastening element (107) and the two lateral segments (118, 119) of the second fastening element (108).

8. The automatic pedal according to claims 6 and 7, **characterized in that** the stop system comprises at least one second stop (122) implanted on at least one lateral segment (118, 119) of the second fastening element (108) and extending perpendicularly to said lateral segment (118, 119), and **in that** said at least one second stop (122) bears against at least one first stop (116) of the first fastening element (107) under the effect of the resilient return element (109).

9. The automatic pedal according to any one of claims 7 or 8, **characterized in that** each resilient return element (109) is made up of at least one helical torsion spring wound around the pivot axis (110).

10. The automatic pedal according to claim 9, **characterized in that** the second fastening element (108) bears a device for adjusting the tension of the resilient return element (109).

11. An engagement mechanism (6, 106) for producing an automatic pedal according to any one of claims 1 to 10, comprising a first fastening element (7, 107), a second fastening element (8, 108), a pivot axis (10, 110) and a resilient return element (9, 109), **characterized in that** it can be mounted separately in order to form an autonomous assembly.
